# EUROPEAN PATENT APPLICATION

(11) **EP 4 075 362 A1**
(43) Date of publication of application: **19.10.2022**
(21) Application number: 21168306.5
(22) Date of filing: 14.04.2021
(51) Int. Cl.: G06Q 20/40, G06Q 20/20, G06Q 20/18, G07G 1/00, G07F 19/00, G06Q 20/10, G06F 3/0488, G07F 7/10

(54) **SELF-SERVICE-TERMINAL AND METHOD FOR ENSURING A SECURE INPUT OF A PERSONAL IDENTIFICATION NUMBER AT A SELF-SERVICE-TERMINAL**

(71) Applicant: Wincor Nixdorf International GmbH, 33106 Paderborn (DE)
(72) Inventor: ENGELNKEMPER, Sebastian, 33449 Langenberg (DE); WEIS, Eduard, 33102 Paderborn (DE); KNOBLOCH, Alexander, 33100 Paderborn (DE)
(74) Representative: Viering, Jentschura & Partner mbB Patent- und Rechtsanwälte

(57) **Abstract**

A self-service-terminal and a method for assisting an input of a personal identification number at a self-service-terminal are provided. The self-service-terminal includes a housing (1), a display (2) operatively supported by the housing (1), a card reader (3) operatively supported by the housing (1), a currency dispenser (4) operatively supported by the housing (1), a communication device (5) configured to comprise at least one touchless sensor (6), a controller (7) configured to be arranged in the housing (1) and to be coupled to at least the display (2) and the communication device (5). The controller (7) is configured to sequentially generate for each number of a personal identification number a first random number. The controller (7) is further configured to control the display (2) to display at least each of the respective first random numbers. The communication device (5) is configured for each displayed first random number to detect by the at least one touchless sensor (6) a control signal by a customer based on the displayed first random number. The controller (7) is further configured based on the control signal to adjust each first random number and to update each of the displayed first numbers.

## Description

Various aspects of this disclosure relate generally to a self-service-terminal and to a method for ensuring a secure input of a personal identification number (PIN) at a self-service- terminal.

In a conventional self-service-terminal, a customer inputs a PIN using an Encrypted PIN Pad (EPP). An EPP is a special numeric keyboard for inputting of a PIN, e.g., at a self-service-terminal, an automated teller machine (ATM), a payment terminal, a money transfer terminal, a point of sales-terminal, and the like. An ATM is an electronic banking outlet, which allows customers to complete basic transactions without the aid of a branch representative, such as withdrawing cash. A payment terminal is a device which interfaces with payment cards to make electronic funds transfers. A point of sales-terminal is an online terminal for cashless payment at a point of sale.

Together with an encryption hardware, the EPP forms a unit and prevents the PIN from ever reaching the outside world unencrypted. A software may only work with an encrypted PIN, and this applies even more to the forwarding of inquiries via network connections. A PIN is only checked in a central computer of a bank using the central key stored there. Since keys are only valid for a limited time for security reasons, there is a method called online personalization of terminals to distribute keys in a secure manner to terminals and especially in their EPPs. In a conventional self-service-terminal, the EPP is used by a plurality of customers. A customer, who wants to interact with the self-service-terminal, is asked to physically input a PIN. The customer uses at least a finger or a plurality of fingers to physically touch the keys of an EPP while inputting the PIN. When touching a key of the EPP by a finger of the customer, a contamination of a key, e.g., by bacteria or viruses, may be transferred to the finger of the customer and finally may increase a risk of infection. Further, inputting the PIN at a self-service-terminal by pressing keys of an EPP has the advantage that a third party may identify, which key has been pressed by a customer, since the third party may identify positions of a finger while inputting at least a number of a PIN. For example, a third party may identify that a customer uses its fore finger of the right hand at an up-left position of the EPP. The third party may with high probability identify that the customer may have pressed or input the number "1" as a first digit of the PIN. For example, in a next step, the third party may, e.g., identify that the same customer uses its fore finger of the right hand at an up-right position of the EPP to input a next digit of the PIN. The third party may with high probability identify that the customer has input the number "3" as the next digit of the PIN, and so on. The third party may have identified all digits of a PIN of the customer, and may identify input patterns by the customer. Privacy of a customers may thus not be provided at conventional self-service-terminals.

In various embodiments, a self-service-terminal and a method for ensuring a secure input of a PIN at a self-service-terminal are provided that may allow for improved hygienic standards at a self-service-terminal and may avoid spreading harmful bacteria and viruses. For example, it is provided that electronic keys of an EPP are not touched by a plurality of customers.

In various embodiments, a self-service-terminal and a method for ensuring a secure input of a PIN at a self-service-terminal are provided that may allow a touchless control of an EPP.

In various embodiments, a self-service-terminal and a method for ensuring a secure input of a PIN at a self-service-terminal are provided that may allow for touchless interactions between a customer and a self-service-terminal to reduce/minimize contamination.

In various embodiments, a self-service-terminal and a method for ensuring a secure input of a PIN at a self-service-terminal are provided that provide a high privacy while inputting a PIN at a self-service-terminal.

In various embodiments, a self-service-terminal and a method for ensuring a secure input of a PIN at a self-service-terminal are provided that increase a security in relation to a conventional EPP.

In various embodiments, a self-service-terminal and a method for ensuring a secure input of a PIN at a self-service-terminal are provided for an optimized human-computer interaction.

In various embodiments, a self-service-terminal and a method for ensuring a secure input of a PIN at a self-service-terminal are provided for fast and efficient communication between a self-service-terminal and customers.

In various embodiments, a self-service-terminal and a method for ensuring a secure input of a PIN at a self-service-terminal are provided using physical sensor signals.

In various embodiments, a self-service-terminal and a method for ensuring a secure input of a PIN at a self-service-terminal are provided for improvement of ergonomics.

In various embodiments, a self-service-terminal and a method for ensuring a secure input of a PIN at a self-service-terminal are provided that present a customer data based on technical means.

In various embodiments, a self-service-terminal and a method for ensuring a secure input of a PIN at a self-service-terminal are provided, which may improve a performance to the detection of input. For example, the self-service-terminal and the method for ensuring a secure input of a PIN at a self-service-terminal may allow for faster or more accurate gesture recognition and/or reducing the processing load of the self-service-terminal when performing recognition.

In various embodiments, a self-service-terminal and a method for ensuring a secure input of a PIN at a self-service-terminal are provided that provide an easy to learn and easy to use input procedure of a PIN. For example, a self-service-terminal and a method for ensuring a secure input of a PIN at a self-service-terminal are provided that may be intuitively used, also by those customers, which rarely use self-service-terminals.

In various embodiments, a self-service-terminal and a method for ensuring a secure input of a PIN at a self-service-terminal are provided that allow for an easy exchange of a conventional EPP, e.g., of an EPP positioned at a lower region of the self-service-terminal, in a conventional self-service-terminal.

In various embodiments, a self-service-terminal and a method for ensuring a secure input of a PIN at a self-service-terminal are provided that allow for a touchless encrypted communication between a communication device and a controller and at least a peripheral device, e.g., a peripheral computer or server at a bank.

In various embodiments, a self-service-terminal is provided, which includes a touchless communication device instead of an EPP.

In various embodiments, the self-service-terminal may provide a secure method, since the controller may be configured to generate for each digit/position/number of a PIN a new random generated number. In other words, a generating of a plurality of random numbers while inputting a PIN may increase a security of a self-service-terminal. The self-service-terminal may allow that a third party may not rely on input patterns while spying out a PIN input by a customer. Since at plurality of random numbers may be sequentially generated for each digit of a PIN, a protection from attacks from outside may increase.

In various embodiments, a self-service-terminal may be provided that may include a housing, a display operatively supported by the housing, a card reader operatively supported by the housing, a currency dispenser operatively supported by the housing, a communication device configured to include at least a touchless sensor, a controller configured to be arranged in the housing and to be coupled to at least the display and the communication device. The controller may be configured to sequentially generate for each digit/position/number of a personal identification number a first random number. The controller may be further configured to control the display to display at least each of the respective first random numbers. The communication device may be configured for each displayed first random number to detect by the sensor a control signal by a customer based on at least the displayed first random number. The controller may be further configured based on the control signal to adjust each first random number, e.g., by a predetermined amount, and to update each of the displayed first numbers.

In various embodiments, the communication device may include the display. The display may be a non-observable display. In other words, the display may be configured to minimize a spying out of the numbers of a PIN displayed on the display.

In various embodiments, the display may be arranged at a portion/position at the self-service-device, which corresponds to a portion/position of an EPP at a conventional self-service-terminal. Thus, a usability of a self-service-terminal may be increased.

In various embodiments, the display may be arranged at a position, which may be a position secured from external attacks, e.g., a position that does not allow a third party to have insight to the display.

In various embodiments, the sensor may include a plurality of sensors.

In various embodiments, the at least one sensor may be positioned next to the display.

In various embodiments, the plurality of sensors may be positioned such, that the sensors may surround the display.

In various embodiments, the plurality of sensors may be positioned such, that at least a sensor is positioned above the display, e.g., in a middle position of a length of the display, at least a sensor is positioned below the display, e.g., in a middle position of a length of the display, at least a sensor is positioned left to the display, e.g., in a middle position of an height of the display, at least a sensor is positioned right to the display, e.g., in a middle position of an height of the display.

In various embodiments, the controller may be configured to display at least an arrow of a plurality of arrows on the display for indicating a use of the self-service-terminal.

In various embodiments, the controller may be configured to control the display to digitally display at least a first random number at a central position of the display, e.g., a number labeled with "5".

In various embodiments, the controller may be configured to control the display to digitally display a first arrow at a left and, e.g., central, position on the display. The controller may be further configured to digitally display a second number in the arrow at the left portion, wherein the second number may be a number, which is decreased by a predetermined amount e.g., 1, 2, 3, and so on, in relation to the first random number displayed in a center region of the display. For example, the second number, e.g., labeled with "4", may be decreased by one digit in relation to the first random number, e.g., labeled with "5", displayed in a central portion of the display. In case the controller may detect via at least a sensor, that the customer touchless inputs a gesture, e.g., a swipe left gesture/movement by a hand of the customer, to decrease the displayed central number by one digit, the controller is configured to update the displayed numbers displayed on the display. The controller may be configured to, in case of a swipe left gesture/movement of a hand of a customer, update the first random number in the central portion by a number, which may be decreased by one in relation to the displayed first random number.

In various embodiments, the controller may be configured to control the display to digitally display a second arrow at a right and, e.g., central, position on the display. The controller may be further configured to digitally display a third number in the second arrow at the right portion, wherein the third number may be a number, which is increased by a predetermined amount, e.g., 1, 2, 3, and so on, from the first random number displayed in a center region of the display. For example, the third number, e.g., labeled with "6", may be increased by one digit in relation to the first random number, e.g., labeled with "5", displayed in a central portion of the display. In case the controller may detect via at least a sensor, that the customer touchless inputs a gesture, e.g., swipe left, to decrease the displayed central number by one digit, the controller is configured to update the displayed numbers. The controller may be configured to, in case of a swipe right movement of a hand of a customer, update the first random number in the central portion by a number, which may be increased by one in relation to the displayed first random number. In other words, the displayed numbers in the first and second arrows may be updated, e.g., automatically updated, depending on the current number displayed in a central portion of the display by the controller.

In various embodiments, the controller may be configured to control the display to digitally display a third arrow at an upper portion/position of the display, e.g., graphically described by a term corresponding to a correction process.

In various embodiments, the controller may be configured to control the display to digitally display a fourth arrow at a lower portion/position of the display, e.g., graphically described as a term corresponding to a cancellation process.

In various embodiments, as an example, the controller may be configured to control the display to digitally display a first random number "5" at a central position of the display. The controller may be configured to control the display to simultaneously digitally display a first arrow and a number "4" in the first arrow in a left portion of the display. The controller may be configured to control the display to simultaneously digitally display a second arrow and a number "6" in the second arrow in a right portion of the display. The controller may be configured to control the display to simultaneously digitally display a third arrow and a term "correction" in a third arrow in an upper portion of the display. The controller may be configured to control the display to simultaneously digitally display a fourth arrow and a term "cancellation" in the fourth arrow in a lower portion of the display.

In various embodiments, each first random number may be a number in a range of 0 to 9. In other words, the controller may be configured to generate by a pseudo random number generator for each digit of a PIN a random number in a range of 0 to 9.

In various embodiments, the self-service-terminal may further include a second display for displaying at least data in respect to a bank account of the customer. The controller may be configured to control the second display to display at least information in relation to a bank account of the respective customer, e.g., the display may be configured to display an account balance, an amount of money to be withdrawn.

The self-service-terminal may further include an audiovisual feedback indicating at least that the personal identification number may be correct.

In various embodiments, the self-service-terminal may further include a headphone output or a communication device, which allows to establish a communication connection between the self-service-terminal and one or more headphones, e.g., one or more wireless headphones, e.g., one or more Bluetooth headphones. For example, the controller may be configured to output information/feedback from the self-service-terminal relating to a status of an input of a PIN to a blind person via the headphone output.

In various embodiments, the self-service-terminal may further include at least a speaker. The speaker may be configured to output information/feedback relating to a status of an input of a PIN to a blind customer. In various embodiments, the controller may be configured to control the speaker to output feedback on the input of the PIN, e.g., to indicate a blind customer, that the input of the PIN has been correct or that an error has occurred in the PIN input procedure. For example, the controller may be configured to control the speaker that a digit or all digits of a PIN has been successfully input by the customer.

In various embodiments, the self-service-terminal may read a customer card using a card reader slot arranged in the housing of the self-service-terminal. The self-service-terminal may ask the customer, e.g., after data has been red from the customer card, to input a PIN corresponding to the customer card using the communication device, a sensor and voice recognition and/or gesture recognition. The customer may input the PIN using speech control and/or gesture control. For example, the controller may be configured to generate a first number at random selected from a number range between 0 and 9 and may display the respective generated number at a central position of the display. In case, the number displayed to the customer corresponds to the first digit of the PIN of the customer, the customer may confirm the number by a push gesture using at least a hand detected by at least a sensor. The controller may be configured to accept the first digit of the PIN. In case, the number displayed to the customer does not correspond to the first digit of the PIN of the customer, the customer may adjust/adapt the displayed number by a swipe left gesture of the hand or a swipe right gesture of the hand. In case, the customer wishes to decrease the displayed number, the customer may use a swipe left gesture of the hand. In case, the at least one sensor detects the swipe left gesture of the hand of the customer, the controller may update the number displayed in a central portion of the display by a number, which is decreased by a digit. The customer may repeat such decreasing as often as necessary. In case, the customer wishes to increase the displayed number, the customer may use a swipe right gesture of the hand. In case, the at least one sensor detects the swipe right gesture of the hand of the customer, the controller may update the number displayed in a central portion of the display by a number, which is increased by a digit. The customer may repeat such decreasing as often as necessary. In case, the customer has made a wrong input/wishes to make a correction, the customer may use a swipe up gesture of the hand. In case the at least one sensor may detect the swipe up gesture of the hand by gesture recognition, the controller may be configured to allow for a correction of the digits of the PIN the customer wants to correct. In case, the customer wishes to quit/cancel the current input procedure of the PIN, the customer may use a swipe down gesture of the hand. In case the at least one sensor may detect the swipe down gesture of the hand by gesture recognition, the controller may be configured to allow for cancellation of the current input of the PIN. After speech control and/or gesture control has been completed and the PIN has been input, the controller may be configured to encrypt the PIN.

In various embodiments, the sensor may include a microphone. The microphone may be configured to detect the control signal by at least a voice command of the customer.

In various embodiments, the microphone may be configured to record at least a voice command of the customer and the controller may be configured to process the recorded voice data. A voice command may be one of at least the following: "up", "down", "confirm/confirmation", "back/return", "cancel/cancellation". For example, a customer may indicate by a command similar to "confirm" or "confirmation" its wish to confirm that the current number displayed on the display corresponds to the number it wishes to input to the self- service-terminal.

In various embodiments, the self-service-terminal may include a plurality of microphones. In other word, the self-service-terminal may have an optimized voice recognition, since a variety of microphones may be used for voice recognition.

In various embodiments, the sensor may be configured to detect the control signal by gesture recognition of at least a hand of the customer. The at least one sensor may be configured to detect a gesture/movement of at least a hand of a customer, who, e.g., stands in front/next/adjacent to the self-service-terminal. The at least one sensor may be configured to touchless detect a change of a position of an object, e.g., of a hand of a customer and to generate analog or digital data output relating to the change of the position of the object.

The sensor may include at least one of at least a binary sensor, at least an ultrasonic sensor, at least a distance measurement sensor, at least a camera, at least a time-of-flight camera, at least a structured light camera.

In various embodiments, at least a binary sensor, e.g., a photodiode, an ultrasonic sensor, a capacity sensor, may be used to detect a hand gesture of a customer. Since binary sensors are low complex sensors, a complexity of the overall system may be kept low. The self-service-terminal may include, e.g., four binary sensors positioned adjacent to the display. A first binary sensor may be positioned at a left position in relation to the display, e.g., seen from a position in front of the self-service-terminal. A second binary sensor may be positioned at a right position in relation to the display, e.g., seen from a position in front of the self-service-terminal. A third binary sensor may be positioned at an upper/top position in relation to the display, e.g., seen from a position in front of the self-service-terminal. A fourth binary sensor may be positioned at a lower position in relation to the display, e.g., beneath the display, e.g., seen from a position in front of the self-service-terminal. The binary sensors may be electrically coupled to the controller and/or to each other. The binary sensors may be coupled to a voltage supply. Each binary sensor may detect a presence of an object, e.g., at least a hand, both hands, a finger of a user. The output of the sensors may be digital or analog. For example, in an idle mode, each binary sensor may output "0" to the controller. The controller may receive an output of each sensor. In case a hand of a customer approaches a sensor of the plurality of sensors, the respective sensor may be configured to switch its output from logic "0" to "1". Depending on the sensor(s), which output(s) a "0" or "1", the controller may be configured to determine which action/command the customer wishes to be performed.

In various embodiments, the binary sensors may be ultrasonic sensors or capacity sensors capable or photodiodes of detecting a presence of at least a hand next to the respective sensor(s).

In various embodiments, the sensor may include at least a line/array of binary sensors, e.g., linear binary sensors. For example, a plurality of binary sensors may be positioned in a line/array, e.g., a horizontal line when viewed from a front view of the self-service-terminal. In case, a customer moves its hand from a right side to a left side/swipe left, the controller may determine in a time sequence firstly an output of "1" of binary sensors positioned at a right position on the line of binary sensor while the binary sensors positioned on a left side of the sensor line/array may output "0". Afterwards the controller may determine an output of "1" of binary sensors positioned at a left position on the line of binary sensors and may determine an output of "0" of binary sensors on the right side of the line of binary sensors. The controller may be configured to determine a hand swipe of a customer from right to left. In case, a customer moves its hand from a left side to a right side/swipe right, the controller may determine in a time sequence firstly an output of "1" of binary sensors positioned at a left position on the sensor line/array of binary sensor while the binary sensors positioned on a right side of the sensor line/array may output "0". Afterwards the controller may determine an output of "1" of binary sensors positioned at a right position on the sensor line/array of binary sensors and may determine an output of "0" of binary sensors on the left side of the line/array of binary sensors. The controller may be configured to determine a hand swipe from left to right. For example, a plurality of binary sensors may be positioned in a line/array, e.g., a vertical line when viewed from a front view of the self-service-terminal. In case, a customer moves its hand from a lower position to an upper position/swipe up, the controller may determine in a time sequence firstly an output of "1" of binary sensors positioned at a lower position on the vertical sensor line/array of binary sensor while the binary sensors positioned at an upper position of the sensor line/array may output "0". Afterwards the controller may determine an output of "1" of binary sensors positioned at an upper position on the line/array of binary sensors and may determine an output of "0" of binary sensors at a lower position of the line/array of binary sensors. The controller may be configured to determine a hand swipe from down to up/swipe up. In case, a customer moves its hand from an upper position to a lower position/swipe down, the controller may determine in a time sequence firstly an output of "1" of binary sensors positioned at an upper position on the line/array of binary sensor while the binary sensors positioned at a lower position of the sensor line/array may output "0". The controller may receive the output of the sensors. Afterwards, the controller may determine an output of "1" of binary sensors positioned at a lower position on the line/array of binary sensors and may determine an output of "0" of binary sensors at an upper position of the line/array of binary sensors. The controller may be configured to determine a hand swipe from up to down/swipe down. In case, a customer moves/pushes its hand from a position away, e.g., far away, from the line/array of binary sensors to a position next/adjacent to the line/array of binary sensors, the controller may firstly determine an output of "1" of approximately all binary sensors and later on in a time sequence an output of "0" of the binary sensors at edge regions and an output of "1" of binary sensors positioned central in the line/array of binary sensors. The controller may be configured to determine a push gesture/movement of a hand of a customer.

In various embodiments, the self-service-terminal may include at least a distance measurement sensor. The self-service-terminal may include, e.g., four distance measurement sensors. A first distance measurement sensor may be positioned at a left side of the display, e.g., when viewed from a front side of the self-service-terminal. A second distance measurement sensor may be positioned at a right side of the display, e.g., when viewed from a front side of the self-service-terminal. A third distance measurement sensor may be positioned at an upper side of the display, e.g., when viewed from a front side of the self-service-terminal. A fourth distance measurement sensor may be positioned at a lower side of the display, e.g., when viewed from a front side of the self-service-terminal. The controller may be electrically coupled to each of the distance measurement sensors. Each of the distance measurement sensors may be configured to measure a distance from the respective sensor to an object, e.g., a hand of a customer. In case, a customer moves its hand in at least one of a plurality of direction, the controller may be configured to determine based on the output(s) of the distance measurement sensor(s) a direction of a gesture/movement of the hand. The controller may be configured to measure a movement of the hand in a left direction/swipe left, in a right direction/swipe right, in an upward direction/swipe up, in a downward direction/swipe down and a movement towards the display/push movement.

In various embodiments, the at least one sensor may include a camera. The camera may be electrically coupled to the controller. The controller may be configured using image recognition and/or image classification to detect movement of a hand of a customer in different directions.

In various embodiments, the sensor may include at least a time-of-fight-camera (TOF-camera). A TOF-camera may be a range imaging camera system employing TOF-techniques to resolve distance between the camera and an object for each point of the image, by measuring the round-trip time of an artificial light signal provided, e.g., by a laser or a light emitting diode. The entire scene may be captured with each laser pulse. The scene may be captured point-by-point with a laser beam such as in scanning. A TOF-camera may at least include an illumination unit, optics, image sensor, and driver electronics. The illumination unit may be configured to illuminate the scene. For radio-frequency-modulated light sources with phase detector imagers, the light has to be modulated with high speeds realized by light emitting diodes or laser diodes. The illumination normally uses infrared light to make the illumination unobtrusive. The optics may include a lens, which may gather the reflected light and may image the environment onto the image sensor. An optical band-pass filter may only pass the light with the same wavelength as the illumination unit. This may help to suppress non-pertinent light and may reduce noise. Each pixel of the image sensor may measure the time the light has taken to travel from the illumination unit to the object, e.g., a customer or a hand of a user, and back to the image sensor. The driver electronics may be configured to control the illumination unit and the image sensor by high-speed signals.

In various embodiments, the sensor may include at least a structured light camera. A structured light camera may be configured to project a narrow band of light onto a three-dimensionally shaped surface, which may produce a line of illumination that may appear distorted from other perspectives than that of the projector, and can be used for geometric reconstruction of the surface shape, e.g., of a hand of a customer. The controller may be configured to detect a position of a hand of a customer using at least a structured light camera.

In various embodiments, in case the control signal may be a down voice command of the customer detected by the sensor or a swiping left of the hand of the customer detected by the sensor, the controller may be further configured to adjust the respective first random number by decreasing at least the displayed first random number by a predetermined amount, e.g., by 1, e.g., from 5 to 4. The controller may be further configured to control the display to display the adjusted first random number.

In various embodiments, in case the control signal may be an up-voice command of the customer detected by the sensor or a swiping right of the hand of the customer detected by the sensor, the controller may be further configured to adjust the respective first random number by increasing at least the displayed first random number by a predetermined amount, e.g., by 1, e.g., from 5 to 6. The controller may be further configured to control the display to display the adjusted first random number.

In various embodiments, in case the control signal may be a confirmation voice command of the customer detected by the sensor or a push of the hand of the customer detected by the sensor, the controller may be further configured to adjust the respective first random number by confirming the displayed first random number as a first number of the personal identification number. The controller may be further configured to generate sequentially a next random number of the personal identification number, which may have exemplarily 4 digits. The controller may be further configured to control the display to display the further random number, generated by the controller.

In various embodiments, in case the control signal may be a correction voice command of the customer detected by the sensor or a swiping up of the hand of the customer detected by the sensor, the controller may be further configured to adjust each first random number by cancelling a respective current number, e.g., a random number, of the personal identification number displayed on the display and by returning to the previous number of the personal identification number displayed on the display.

In various embodiments, in case the control signal may be a correction voice command of the customer detected by the sensor or a swiping up of the hand of the customer detected by the sensor, the controller may be further configured to generate a new random number instead of the current displayed number and to update the displayed number by the new random number.

In various embodiments, in case the control signal may be a cancellation voice command of the customer detected by the sensor or a swiping down of the hand of the customer detected by the sensor, the controller may be further configured to adjust each first random number by cancelling the input of each number of the personal identification number. In other words, the input procedure of the PIN may be terminated and a card in the card reader may be output to the customer.

In various embodiments, the self-service-terminal may further include at least a deposit acceptance area operatively supported by the housing and coupled to the controller. At the deposit acceptance area at an ATM, the customer may for example advice to deposit cash into the account of the customer at a bank.

In various embodiments, a method for ensuring a secure input of a personal identification number at a self-service-terminal is provided.

In various embodiments, the method may include sequentially generating for each number of the personal identification number a first random number by a controller. The method may further include displaying each first random number as a first number/digit of the personal identification number by a display. The method may further include detecting for each of the displayed first numbers a control signal by a customer based on the respective displayed first random number by a touchless sensor of a communication device. The method may further include adjusting based on the control signal each first number by the controller. The method may further include updating each of the displayed first numbers by the controller.

In various embodiments, the method may further include that, in case the detecting by the sensor of the control signal is a detecting of a down voice command of the customer or a swiping left of a hand of the customer, the adjusting by the controller further includes decreasing by the controller of the first random number by a predetermined amount, e.g., by 1.

In various embodiments, the method may further include that, in case the detecting by the sensor of the control signal is a detecting of an up-voice command of the customer or a swiping right of the hand of the customer, the adjusting by the controller may further include increasing by the controller of the first random number by a predetermined amount, e.g., by 1.

In various embodiments the method may further include that, in case the detecting by the sensor of the control signal is a detecting of a confirmation voice command of the customer or a push of the hand of the customer, the adjusting by the controller further includes keeping the current first random number as the respective number of the personal identification number, the generating may further include, e.g., sequentially, generating by the controller a next, e.g., second, third, fourth, and so on, random number of the personal identification number.

In various embodiments, the displaying may further include displaying of at least the next random number by the display.

In various embodiments, the method may further include that, in case the detecting by the sensor of the control signal is a detecting of a correction voice command of the customer or a swiping up of the hand of the customer, the adjusting by the controller may further include cancelling a respective current number of the personal identification number displayed by the display, and the updating may further include returning to the previous number of the personal identification number displayed by the display.

In various embodiments, the method may further include that, in case the detecting by the sensor of the control signal is a detecting of a correction voice command of the customer or a swiping up of the hand of the customer, the adjusting by the controller may further include generating a new random number instead of the current random number or number displayed on the display, deleting the current random number, and the updating may further include displaying the new, e.g., second, third, fourth, and so on, random number on the display.

In various embodiments, the method may further include that, in case the detecting by the sensor of the control signal may be a detecting of a cancellation voice command of the customer or a swiping down of the hand of the customer, the adjusting by the controller may further include cancelling the input of the personal identification number. The method may further include returning to a start configuration for inputting a PIN displayed on the display.

In various embodiments, the self-service-terminal may be an automated teller machine, a money transfer terminal or a point of sales-terminal.

In various embodiments, the self-service-terminal may include, in case the personal identification number has been input correctly, indicating the successful input by a signal on a headphone.

In various embodiments, the self-service-terminal may include, in case the personal identification number has been input incorrectly, indicating the unsuccessful input by a signal on a headphone.

In various embodiments, the down voice command of a customer may be a spoken word by the customer, which indicates that the customer wants to decrease a displayed number of a PIN. In various embodiments, the up-voice command of a customer may be a spoken word by the customer, which indicates that the customer wants to increase a displayed number of a PIN. In various embodiments, the confirmation voice command of a customer may be a spoken word by the customer, which indicates that the customer wants to confirm a displayed number as corresponding to a number of a PIN. In various embodiments, the correction voice command of a customer may be a spoken word by the customer, which indicates that the customer wants to correct a displayed number, which does not correspond to a number of a PIN. In various embodiments, the down voice command of a customer may be a spoken word by the customer, which indicates that the customer wants to terminate an input of a PIN.

Each feature of an embodiment may be combined with at least another feature of another embodiment. Each effect described herein with respect to the self-service-terminal may also refer to the methods described herein and vice versa. Each part of a list described herein may be combined with at least another part of another list.

As used in this specification and claim(s), the words "comprising" (and any form of comprising, such as "include" and "includes"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

All of the devices and/or methods disclosed and claimed herein can be made and executed without undue experimentation in light of the present disclosure. While the devices and methods of this invention have been described in terms of embodiments, it will be apparent to those skilled in the art that variations may be applied to the compositions and/or methods and in the steps or in the sequence of steps of the method described herein without departing from the concept, spirit and scope of the invention. All such similar substitutes and modifications apparent to those skilled in the art are deemed to be within the spirit, scope and concept of the invention as defined by the appended claims.

It will be understood that particular embodiments described herein are shown by way of illustration and not as limitations of the invention. The principal features of this invention can be employed in various embodiments without departing from the scope of the invention. Those skilled in the art will recognize, or be able to ascertain using no more than routine experimentation, numerous equivalents to the specific procedures described herein. Such equivalents are considered to be within the scope of this invention and are covered by the claims.

The use of the word "a" or "an" when used in conjunction with the term "comprising" in the claims and/or the specification may mean "one," but it is also consistent with the meaning of "one or more," "at least one," and "one or more than one.". The use of the term "or" in the claims is used to mean "and/or" unless explicitly indicated to refer to alternatives only or the alternatives are mutually exclusive, although the disclosure supports a definition that refers to only alternatives and "and/or.". Throughout this application, the term "about" is used to indicate that a value includes the inherent variation of error for the device, the method being employed to determine the value, or the variation that exists among the study subjects.

The phrase "at least one of" with regard to a group of elements (for example at least one of A and B, or in the same way, at least one of A or B) may be used herein to mean at least one element from the group consisting of the elements, i.e. the logical and/or. For example, the phrase "at least one of" with regard to a group of elements may be used herein to mean a selection of: one of the listed elements, a plurality of one of the listed elements, a plurality of individual listed elements, or a plurality of a multiple of listed elements. The term "coupled" is used herein to mean, for example, communicatively coupled, which may include type of a direct connection or an indirect connection. They may include any suitable wired connection and/or wireless connection.

A "controller" (or equivalently "processing circuitry" or "processing circuit") as used herein is understood as referring to any circuit that performs an operation(s) on signal(s), such as, for example, any circuit that performs processing on an electrical signal or an optical signal. A processing circuit may thus refer to any analog or digital circuitry that alters a characteristic or property of an electrical or optical signal, which may include analog and/or digital data. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (for example a processor or microprocessor). As utilized herein, "digital processing circuit(ry)" may refer to a circuit implemented using digital logic that performs processing on a signal, for example, an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single a processing circuit may be equivalently split into two separate processing circuits, and conversely that two separate processing circuits may be combined into a single equivalent processing circuit.

In the drawings, like reference characters generally refer to the same parts throughout the different views. The use of the same reference numbers in different figures indicates similar or identical items or features. The drawings are not necessarily to scale, emphasis instead generally being placed upon illustrating the principles of the invention.

In the following description, various examples of the invention are described with reference to the following drawings, in which:
FIG. 1 shows a self-service-terminal according to various examples.
FIG. 2 shows a communication device of a self-service-terminal described herein in a schematic view according to various examples.
FIG. 3 shows a communication device of a self-service-terminal described herein in a schematic view according to various examples.
FIG. 4 shows exemplary gestures of a hand of a customer according to various examples.
FIG. 5 shows a flow chart of a method for ensuring a secure input of a PIN at a self-service-terminal according to various examples.

The skilled in the art will recognize that the examples are not limited to the examples or drawings described. It should be understood that the drawings and detailed description thereto are not intended to limit examples to the particular form disclosed, but on the contrary, the intention is to cover all modifications, equivalents and alternatives falling within the spirit and scope as defined by the appended claims. As used throughout this application, the word "may" is used in a permissive sense (i.e., meaning having the potential to), rather than the mandatory sense (i.e., meaning must). Further, it is obvious, that each element of a list including a plurality of elements is also to be considered to be disclosed in combination with any further element of a further list.

The following detailed description refers to the accompanying drawings that show, by way of illustration, specific details and examples in which the invention may be practiced. These examples are described in sufficient detail to enable those skilled in the art to practice the invention. Other examples may be utilized and structural, logical, and electrical changes may be made without departing from the scope of the invention. The various examples are not necessarily mutually exclusive, as some examples can be combined with one or more other examples to form new examples. Various examples are described in connection with methods and various examples are described in connection with self-service-terminals. However, it may be understood that examples described in connection with methods may similarly apply to the devices, and vice versa.

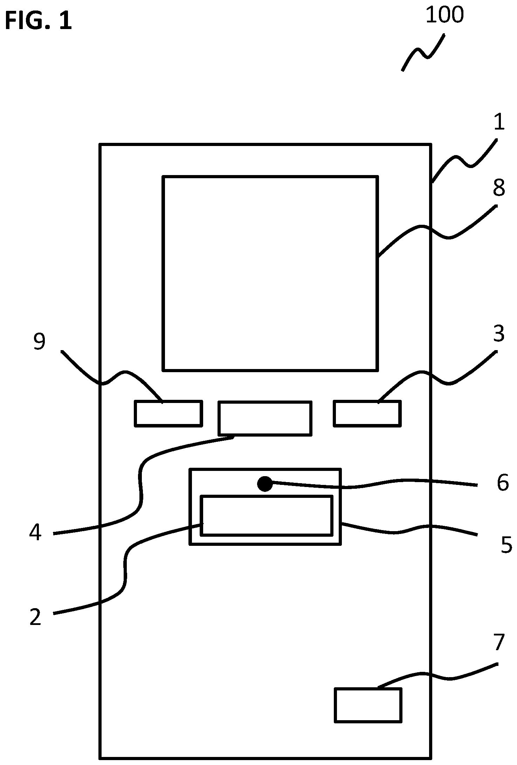

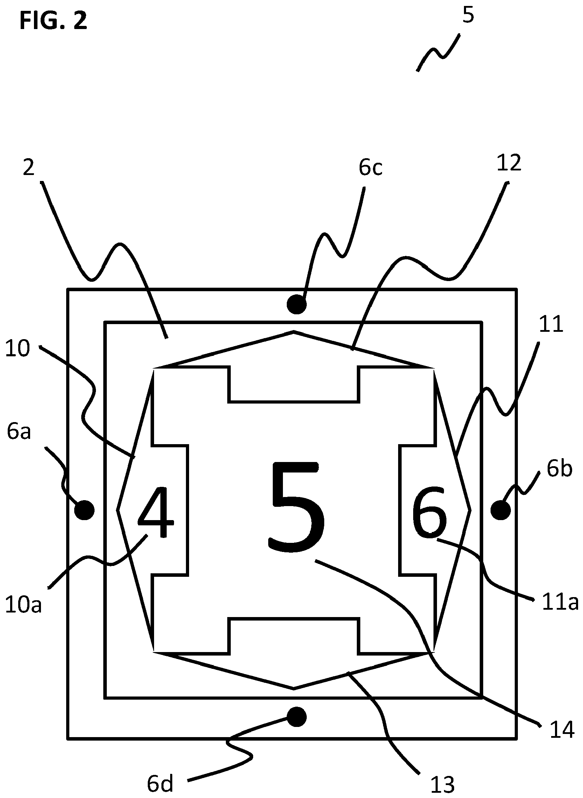

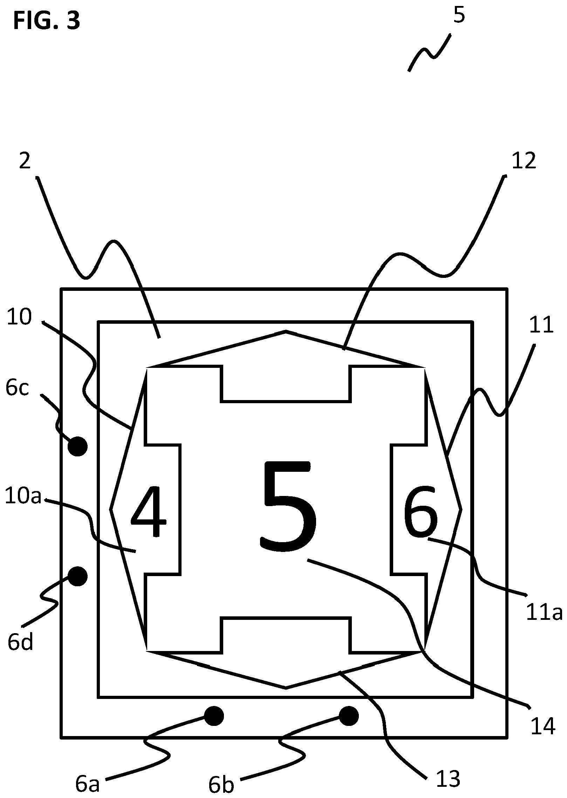

FIG. 1 shows a self-service-terminal 100 according to various examples. FIG. 2 shows a communication device 5, which may be a portion of a self-service-terminal 100 described herein in a schematic view, according to various examples. FIG. 3 shows a communication device 5 of a self-service-terminal 100 described herein in a schematic view according to various examples.

The self-service-terminal 100 may include a housing 1. The self-service-terminal 100 may further include a card reader 3, which may receive a bank card of a customer. The card reader 3 may be operatively supported by the housing 1. The self-service-terminal 100 may further include a currency dispenser 4, which may withdraw cash to a customer. The currency dispenser 4 may be operatively supported by the housing 1. The self-service-terminal 100 may further include a cash deposit 9. The customer may deposit cash to a bank account using the cash deposit 9. The self-service-terminal 100 may include a communication device 5. The communication device 5 may be operatively supported by the housing 1. The communication device 5 may include at least a sensor. The sensor may include or be at least one touchless sensor 6, 6a, 6b, 6c, 6d. The self-service-terminal 100 may further include a controller 7. The controller 7, e.g., a processor, may be configured to be arranged in the housing 1. The controller 7 may encrypt a PIN input by a customer using the communication device 5. The controller 7 may further communicate with an external computer or server. The communication device 5 may further include a display 2. The controller 7 may be coupled to at least the display 2 and the communication device 5. The controller 7 may sequentially generate for each number of a PIN of a customer a first random number 14. The controller 7 may control the display 2 to sequentially display at least each of the respective first, second, third, fourth, and so on, random number 14, as schematically illustrated in FIGS. 2 and 3. The communication device 5 may for each displayed first random number 14 detect by the sensor 6, 6a, 6b, 6c, 6d a control signal by a customer based on the displayed, e.g., first, random number 14. The controller 7 may further be configured to adjust each first random number 14 based on the control signal. The controller 7 may update each of the displayed numbers 14. The self-service-terminal 100 may further include a second display 8. The second display 8 may be coupled to the controller 7. For example, the controller 7 may control the second display 8 to display information in relation to a bank account to the customer, e.g., options of the customer to withdraw cash, deposit cash and so on.

The communication device 5, exemplarily shown in FIG. 1, FIG. 2, FIG. 3, may include a display 2. Next/adjacent to the display 2 at least one sensor 6, 6a, 6b, 6c, 6d may be arranged. A first sensor 6a may be positioned at a portion/position left of the display 2, e.g., when viewed from a front view of the self-service-terminal. A second sensor 6b may be positioned at a portion/position right to the display 2, e.g., when viewed from a front view of the self-service-terminal. A third sensor 6c may be positioned at a portion/position above the display 2, e.g., when viewed from a front view of the self-service-terminal. A third sensor 6d may be positioned at a portion/position below the display 2, e.g., when viewed from a front view of the self-service-terminal, as illustratively shown in FIG. 2. The display 2 may be controlled by a controller 7. For example, the display 2 may be positioned at a position corresponding to the position of a conventional EPP, e.g., at a position for simple use by a hand of a customer. The display 7 may display a plurality of symbols, e.g., numbers 10a, 11a, 14 and arrows 10, 11, 12, 13 based on a control signal of the controller 7. For example, the display 2 may display a number 14, e.g., a random number generated by a controller 7, in a central portion of the display 2. The display 2 may display a first graphical arrow 10, a second graphical arrow 11, a third graphical arrow 12, and a fourth graphical arrow 13 based on a control signal of a controller 7. The controller 7 may control the display 2 to display a number 10a, 11a in at least the displayed arrows 10 and 11. For example, the displayed number in the arrow 10 may be the number "4". For example, the displayed number in the arrow 11 may be the number "6". However, it is to understood that each further number in a range of 0 to 9 may be respectively displayed on the display 2.

In various embodiments, the sensors 6, 6a, 6b, 6c, 6d may be binary sensors, e.g., a photodiode, an ultrasonic sensor, a capacity sensor. The binary sensors 6, 6a, 6b, 6c, 6d may be used to detect at least a hand gesture of at least a customer of a plurality of customers. Binary sensors 6, 6a, 6b, 6c, 6d may be of low complexity. The use of binary sensors 6, 6a, 6b, 6c, 6d may make the overall system easy and robust.

The self-service-terminal may include four binary sensors 6a, 6b, 6c, 6d positioned adjacent to the display 2 as schematically illustrated in FIG. 2. A first binary sensor 6a may be positioned at a left position, e.g., a left middle position, in relation to the display 2. A second binary sensor 6b may be positioned at a right position, e.g., a right middle position, in relation to the display 2. A third binary sensor 6c may be positioned at an upper/top position, e.g., an upper middle position, in relation to the display 2. A fourth binary sensor may be positioned at a lower position, e.g., a lower middle position, in relation to the display, e.g., beneath the display 2. The binary sensors 6a, 6b, 6c, 6d may be electrically coupled to the controller 7. The binary sensors 6a, 6b, 6c, 6d may be coupled to a voltage supply.

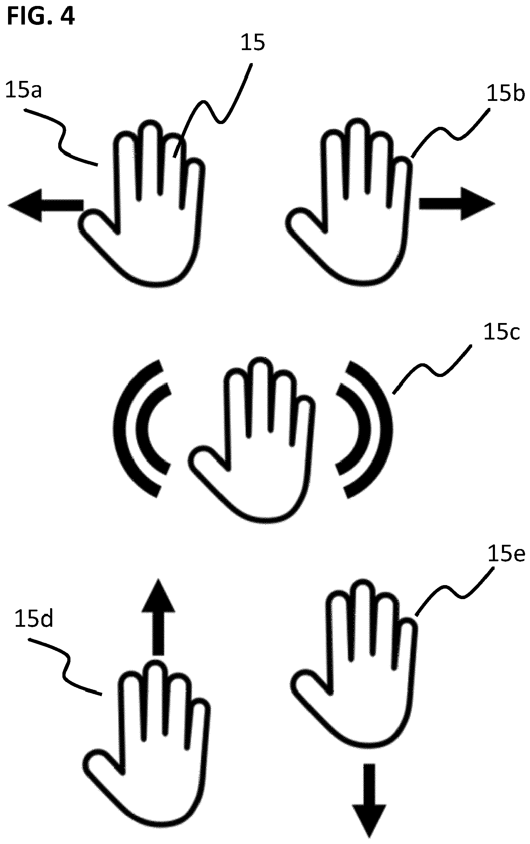

FIG. 4 shows exemplary gestures/movements/motions of a hand 15 of a customer according to various examples. It is to be noted, that the gestures shown in FIG. 4 are to be understood as examples, and the self-service-terminals and the methods described herein may detect/determine further gestures of a hand 15 of a customer.

Each binary sensor 6a, 6b, 6c, 6d may detect a presence and movement in space of an object, e.g., a hand 15 of a user as schematically shown in FIG. 4. For example, in an idle mode, each binary sensor 6a, 6b, 6c, 6d may output "0" to the controller 7. In case a hand 15 of a customer staying in front of the self-service-terminal 100 approaches a sensor of the plurality of sensors 6a, 6b, 6c, 6d, the respective sensor may switch its output from "0" to "1". In relation to the sensor or the sensors 6, 6a, 6b, 6c, 6d, which output(s) "0" or "1", the controller 7 may determine which action the customer wishes to be performed in relation to an input of a PIN at the self-service-terminal 100.

Each binary sensor 6a, 6b, 6c, 6d may detect an approximation of a hand 15 of a customer to the respective sensor. For example, in case a customer moves/swipes its hand from right to left (see 15a in FIG. 4) at least the binary sensor 6a may detect an approximation of the hand 15 of the customer to the binary sensor 6a, schematically shown in FIG. 2. For example, in case a customer moves/swipes its hand from left to right (see 15b in FIG. 4) at least the binary sensor 6b may detect an approximation of the hand 15 of the customer to the binary sensor 6b, schematically shown in FIG. 2. For example, in case a customer moves/swipes its hand upwards (see 15d in FIG. 4) at least the binary sensor 6c may detect an approximation of the hand 15 of the customer to the binary sensor 6c, as schematically shown in FIG. 2. For example, in case a customer moves/swipes its hand downwards (see 15e in FIG. 4) at least the binary sensor 6d may detect an approximation of the hand 15 of the customer to the binary sensor 6d, as schematically shown in FIG. 2. For example, in case a customer moves its hand or approximates the hand to the display (see 15c in FIG. 4) at least the binary sensors 6a, 6b, 6c, 6d may detect each an approximation of the hand 15 of the customer to the binary sensor 6a, 6b, 6c, 6d approximately equally.

Based on the respective signal/signals output by one or a plurality of sensors 6a, 6b, 6c, 6d, the controller 7 may determine a gesture of a hand 15 of a customer.

In various embodiments, the sensor may include at least a first array of binary sensors 6a, 6b, e.g., arranged on a line and at least a second array of binary sensors 6c, 6d, e.g., arranged on a line, as schematically illustrated in FIG. 3. For example, at least two binary sensors 6a and 6b may be positioned on a horizontal line in a portion next to and below the display 2. For example, at least two binary sensors 6c and 6d may be positioned on a vertical line in a portion next to and left to the display 2. It is to be noted, that the amount of two binary sensors in one direction is only exemplary, and a plurality of binary sensors, e.g., 4, 8, 10, 12, 14 or 16, may be arranged in each array.

In case, a customer moves its hand from a right side to a left side/swipe left 15a, the controller 7 may determine in a time sequence firstly an output of "1" of binary sensors positioned at a right position, e.g., sensor 6b, on the line of binary sensor 6a, 6b while the binary sensors positioned on a left side of the sensor array, e.g., sensor 6a, may output "0". Then, the controller 7 may determine an output of "1" of binary sensors positioned at a left position on the sensor array of binary sensors, e.g., sensor 6a, and may determine an output "0" of binary sensors on the right side of the line of binary sensors, e.g., sensor 6b. Thus, the controller 7 may be configured to determine a hand swipe 15a from right to left.

In case, a customer moves its hand from a left side to a right side/swipe right 15b, the controller 7 may determine in a time sequence firstly an output of "1" of binary sensors positioned at a left position on the array of binary sensor, e.g., sensor 6a, while the binary sensors positioned at a right side of the sensor array may output "0", e.g., sensor 6b. Then, the controller 7 may determine an output of "1" of binary sensors positioned at a right position on the array of binary sensors, e.g., sensor 6b, and may determine an output "0" of binary sensors at the left side of the array of binary sensors, e.g., sensor 6a. Thus, the controller 7 may be configured to determine a hand swipe from left to right 15b.

For example, a plurality of binary sensors 6c and 6d may be positioned in an array, e.g., a vertical line when seen from a front view of the self-service-terminal. In case, a customer moves its hand from a lower position to an upper position/swipe up 15d, the controller 7 may determine in a time sequence firstly an output of "1" of binary sensors positioned at a lower position on the line of binary sensor, e.g., sensor 6d, while the binary sensors positioned on an upper position of the sensor line, e.g., sensor 6c, may output "0". Then, the controller 7 may determine an output of "1" of binary sensors positioned on an upper position on the line of binary sensors, e.g., sensor 6c, and may determine an output of "0" of binary sensors at the lower position of the line of binary sensors, e.g., sensor 6d. Thus, the controller 7 may determine a hand swipe from down to up/swipe up 15d.

In case, a customer moves its hand from an upper position to a lower position/swipe down 15e, the controller 7 may determine in a time sequence firstly an output of "1" of binary sensors positioned at an upper position on the line of binary sensor, e.g., sensor 6c, while the binary sensors positioned at a lower position of the sensor line may output "0", e.g., sensor 6d. Then, the controller 7 may determine an output of "1" of binary sensors positioned at a lower position on the line of binary sensors, e.g., sensor 6d, and may determine an output of "0" of binary sensors at the upper position of the line of binary sensors, e.g., 6c. Thus, the controller 7 may be configured to determine a hand swipe from up to down/swipe down 15d.

In case, a customer moves/pushes its hand from a position away, e.g., far away, from the binary sensors 6a, 6b, 6c, 6d to a position next to the binary sensors 6a, 6b, 6c, 6d, the controller 7 may firstly determine an output of "0" of approximately all binary sensors 6a, 6b, 6c, 6d. Then, in a time sequence the controller 7 may determine an output of "1" of approximately all binary sensors 6a, 6b, 6c, 6d. Thus, the controller 7 may determine a push gesture/movement of a hand 15c of a customer. It is to be noted that the resolution of an array of binary sensors may be increased by using a plurality of binary sensors for detection of hand gestures of a customer.

The binary sensor may include at least an array of binary sensors, e.g., linear binary sensors. For example, a plurality of binary sensors may be positioned in a line/array, e.g., a horizontal line. In case, a customer moves its hand from a right side to a left side/swipe left 15a, the controller 7 may determine in a time sequence firstly an output "1" of binary sensors positioned at a right position on the line of binary sensor while the binary sensors positioned on a left side of the sensor line may output "0". Then, the controller 7 may determine an output "1" of binary sensors positioned at a left position on the line of binary sensors and may determine an output "0" of binary sensors on the right side of the line of binary sensors. The controller 7 may be configured to determine a hand swipe from right to left 15a. In case, a customer moves its hand from a left side to a right side/swipe right 15b, the controller 7 may determine in a time sequence firstly an output "1" of binary sensors positioned at a left position on the line of binary sensor while the binary sensors positioned on a right side of the sensor line may output "0". Then, the controller 7 may determine an output "1" of binary sensors positioned at a right position on the line of binary sensors and may determine an output "0" of binary sensors on the left side of the line of binary sensors. The controller 7 may be configured to determine a hand swipe from left to right 15b. For example, a plurality of binary sensors may be positioned in a line/array, e.g., a vertical line. In case, a customer moves its hand from a lower position to an upper position/swipe up 15d, the controller 7 may determine in a time sequence firstly an output of "1" of binary sensors positioned at a lower position on the line of binary sensor while the binary sensors positioned at an upper position of the sensor line may output "0". Then, the controller 7 may determine an output of "1" of binary sensors positioned at an upper position on the line/array of binary sensors and may determine an output "0" of binary sensors at the lower position of the line/array of binary sensors. The controller 7 may be configured to determine a hand swipe from down to up/swipe up 15d. In case, a customer moves its hand from an upper position to a lower position/swipe down 15e, the controller 7 may determine in a time sequence firstly an output of "1" of binary sensors positioned at an upper position on the line/array of binary sensor while the binary sensors positioned at a lower position of the sensor line/array may output "0". Then, the controller 7 may determine an output of "1" of binary sensors positioned at a lower position on the line of binary sensors and may determine an output of "0" of binary sensors at the upper position of the line/array of binary sensors. The controller 7 may be configured to determine a hand swipe from up to down/swipe down 15e. In case a customer moves/pushes its hand from a position (far) away from the line of binary sensors to a position next to the line of binary sensors, the controller 7 may firstly determine an output of "1" of approximately all binary sensors and later on in a time sequence an output of "0" of the binary sensors at edge regions and an output of "1" of binary sensors positioned central in the line of binary sensors. The controller may be configured to determine a push gesture/movement 15c of a hand 15 of a customer.

In various embodiments, the sensor 6 may include a TOF-camera. The TOF-camera may be positioned next to the communication device 2. For example, the TOF-camera may be positioned at a communication device 5, as illustratively shown in FIG. 1. The TOF-camera may resolve a distance between a camera and an object, e.g., a hand 15 of a customer, for each point of an image captured by the camera, by measuring the round-trip time of an artificial light signal provided by a light source, e.g., at least a laser or at least a light emitting diode. A TOF-camera may provide distance images in real time, and, using the camera movements of object in space, e.g., a hand 15 of a customer, may be tracked. This allows for interaction with a consumer device such as a self-service-terminal 100. The TOF-camera may generate a range image of a portion in front of a self-service-terminal 100. The TOF-camera and/or a controller 7 may determine a movement 15a, 15b, 15c, 15d, 15e of a hand 15 of a customer which stays in front of a self-service-terminal 100. Since a TOF-camera may measure a distance to an object in space, e.g., a hand 15 of a customer, the self-service-terminal 100 including a TOF-camera may detect a push movement 15c of a hand 15 of a customer.

In various embodiments, a distance of a hand 15 of a user from a position of at least a sensor 6, 6a, 6b, 6c, 6d may be in a range from about 5 centimetres to about 2 meters, e.g., in a range from about 10 centimetres to about 1 meter, e.g., in a range from about 20 centimetres to about 90 centimetres, e.g., in a distance of about 50 centimetres.

A customer may approximate a self-service-terminal 100 which may be in an idle mode. The customer may tap on the display 8 to wake up the self-service-terminal 100 from idle mode. The controller 7 may control the display 8 to display information, e.g., in relation to operations of a bank account. The customer may input an identification card, e.g., a bank card, in the card reader 3. After identification of a customer by the identification card, the self-service-terminal may ask the customer to input a PIN, e.g., a PIN corresponding to the identification card.

In a first step (STEP1), the controller 7 may control the display 8 to indicate to the customer to input a PIN using the communication device 5 and/or at least a sensor 6, 6a, 6b, 6c, 6d. In various embodiments, the controller 7 may further control the display 8 to display instructions giving information to the customer how to input the PIN.

In a second step (STEP2), the controller 7 may control the display 2 to display an image similar to the exemplary images on the display 2 in FIG. 2 and FIG. 3. For example, the controller 7 may control the display 2 to display four arrows 10, 11, 12, 13 as illustratively shown in FIG. 2 and FIG. 3. The four arrows 10, 11, 12, 13 may indicate that the customer may perform hand gestures in directions of the respective arrow. Further, the display 2 or the display 8 may indicate that the customer may also perform a push movement of its hand. To simplify, it is assumed that, as an example, a PIN of a customer may have 4 individual positions/numbers in a range of 0 to 9. The controller 7 may generate a (first) new random number 14 for a first position/digit of a PIN of a customer. The controller 7 may use a random number generator and/or a method for generating a random number using a number generator or a software which allows for generating random numbers. In FIGS. 2 and 3 the number 14 randomly generated by the controller 7 and displayed by the display 2 is exemplarily "5". Simultaneously or afterwards, the controller 7 may generate a second number 10a, which is decreased by 1 in relation to the first random number 14. The controller 7 may control the display 2 to display the second number 10a in an arrow 10, as schematically illustrated in FIG. 2 and FIG. 3. For example, in FIG. 2 and FIG. 3 the second number may be "4". Simultaneously or afterwards, the controller 7 may generate a third number 11a, which is increased by 1 in relation to the first random number 14. The controller 7 may control the display 2 to display the third number 11a in an arrow 11, as schematically illustrated in FIG. 2 and FIG. 3. For example, in FIG. 2 and FIG. 3 the third number may be "6".

In a third step (STEP3), the customer may decide whether the randomly generated number 14 corresponds or does not correspond to a first number of the PIN the customer would like to input. The customer may choose from the following options STEP3_1, STEP3_2, STEP3_3, STEP3_4, STEP3_5:

In case the randomly generated number 14 corresponds/is equal to the first number of the PIN of the customer (STEP3_1), the customer may communicate with the communication device 5 by a push gesture 15c of the hand 15 as illustrated in FIG. 4. The controller 7 using the sensor 6, 6a, 6b, 6c, 6d may detect/determine the push gesture 15c of the hand 15 of the customer and may generate a (second) new random number 14 and may control the display 2 to display the (second) new random number 14 instead of the (first) random number 14.

In case the randomly generated number 14 is greater than the first number of the PIN of the customer (STEP3_2), the customer may communicate with the communication device 5 by a swipe left gesture/movement 15a of the hand 15 as illustrated in FIG. 4.

In case the randomly generated number 14 is smaller than the first number of the PIN of the customer (STEP3_3), the customer may communicate with the communication device 5 by a swipe right gesture/movement 15b of the hand 15 as illustrated in FIG. 4.

In case the customer has already confirmed the first random number 14 by a push gesture 15c, but realizes later on that the confirmed number is wrong (STEP3_4), the customer may ask for a correction by a swipe up gesture/movement 15d of the hand 15 as illustrated in FIG. 4.

In case the customer wants to quit the current input of the PIN (STEP3_5), the customer may communicate with the communication device 5 by a swipe down gesture/movement 15e of the hand 15 as illustrated in FIG. 4.

Each of the described steps may be repeated as often as needed to input a PIN of a customer at a self-service-terminal. The PIN may be input by the customer by sequentially selecting numbers 14 in a range of 0 to 9 for each digit/position of a number of the PIN.

As an example, in a rather rare case that the (first) new random number 14 displayed on the display 2 corresponds/is equal to the first number of a PIN, the customer may confirm the process by a push gesture 14c. In case the (second) new random number 14 displayed on the display 2 corresponds/is equal to the second number of a PIN, the customer may confirm the process by a push gesture 14c. In case the (third) new random number 14 displayed on the display 2 corresponds/is equal to the third number of a PIN, the customer may confirm the process by a push gesture 14c. In case the (fourth) new random number 14 displayed on the display 2 corresponds/is equal to the fourth number of a PIN, the customer may confirm the process by a push gesture 14c.

As a further example, in case that the (first) new random number 14 displayed on the display 2 does not corresponds/is unequal to the first number of a PIN, the customer may control by a swipe left gesture 14a to decrease the (first) new random number 14 by 1. The customer may control by a second swipe left gesture 14a to decrease the (first) new random number 14 by 1 as often as needed. In case the (second) new random number 14 displayed on the display 2 does not corresponds/is unequal to the second number of a PIN, the customer may control by a swipe right gesture 14b to increase the (second) new random number by 1. The customer may control by a second swipe right gesture 14b to increase the (second) new random number 14 by 1 as often as needed. In case the (fourth) new random number 14 displayed on the display 2 corresponds/is equal to the fourth number of a PIN, the customer may confirm the process by a push gesture 15c. In case the customer decides to quit the current input of the PIN at any time, a swipe down gesture 15e will cancel the current input of the PIN. The examples given are only for explanation, and, an order of the gestures 15a, 15b, 15c, 15d of the hand 15 may be arbitrary. The PIN input procedure may be repeated for each digit of the PIN and may be performed by a plurality of customers. Since for each digit of a PIN a new random number 14 may be generated, a security of a self-service-terminal, a communication device, and/or a method described herein may be increased.

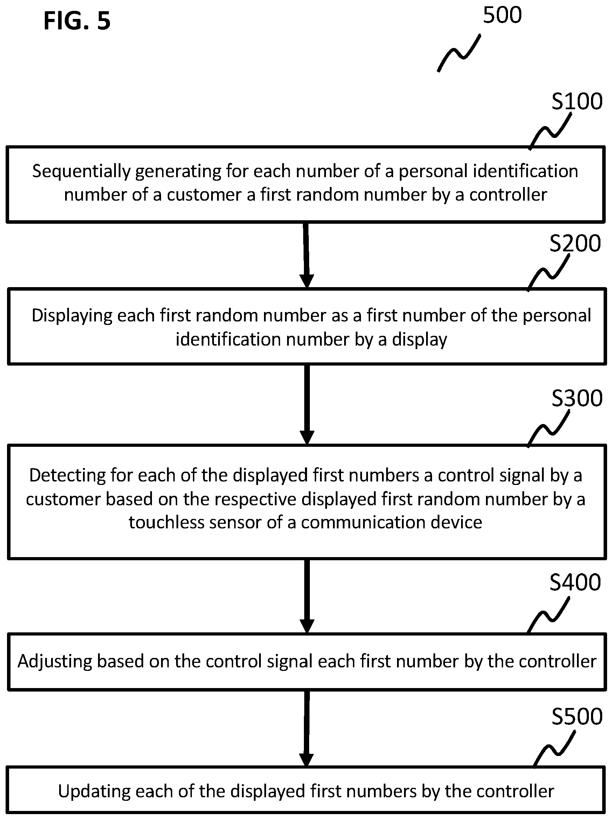

FIG. 5 illustratively shows a flow chart of a method 500 for ensuring a secure input of a personal identification number at a self-service-terminal 100 according to various examples. The method may include sequentially generating for each number of the personal identification number a first random number by a controller (S100). The method may further include displaying each first random number as a first number of the personal identification number by a display (S200). The method may further include detecting for each of the displayed first numbers a control signal by a customer based on the respective displayed first random number by a touchless sensor of a communication device (S300). The method may further include adjusting based on the control signal each first number by the controller (S400). The method may further include updating each of the displayed first numbers by the controller (S500).

The features mentioned above in conjunction with exemplary or specific examples may also be applied to further examples mentioned above and vice versa. Further, advantages mentioned in relation to the devices, e.g., a self-service-terminal, may also refer to the method and vice versa.

In the following, various examples are provided with reference to the FIGS. 1 to 5 and examples described above.
Example 1 is a self-service-terminal, which includes a housing, a display operatively supported by the housing, a card reader operatively supported by the housing, a currency dispenser operatively supported by the housing, a communication device configured to include at least one touchless sensor, a controller configured to be arranged in the housing and to be coupled to at least the display and the communication device. The controller is configured to sequentially generate for each number of a personal identification number a first random number. The controller is further configured to control the display to display at least each of the respective first random numbers. The communication device is configured for each displayed first random number to detect by the sensor a control signal by a customer based on the displayed first random number. The controller is further configured to adjust each first random number based on the control signal and to update each of the displayed first numbers.
In Example 2, the self-service-terminal of Example 1 optionally includes that the communication device includes the display. The display is a non-observable display.
In Example 3, the self-service-terminal of Example 1 or 2 optionally includes that the at least one touchless sensor includes a plurality of sensors.
In Example 4, the self-service-terminal of Examples 1 to 3 optionally includes that each first random number is a number in a range of 0 to 9.
In Example 5, the self-service-terminal of Examples 1 to 4 optionally includes that the self-service-terminal further includes a second display configured to display at least data in respect to a bank account of the customer, and/or that the self-service-terminal further includes an audiovisual feedback indicating at least that the personal identification number is correct.
In Example 6, the self-service-terminal of Examples 1 to 5 optionally includes that the at least one touchless sensor includes a microphone, and that the microphone is configured to detect the control signal by at least a voice command of the customer.
In Example 7, the self-service-terminal of Examples 1 to 6 optionally includes that the at least one touchless sensor is configured to detect the control signal by gesture recognition of at least a hand of the customer. The at least one touchless sensor includes at least one of at least a binary sensor, at least an ultrasonic sensor, at least a distance measurement sensor, at least a camera, at least a time-of-flight camera, at least a structured light camera.
In Example 8, the self-service-terminal of Examples 1 to 7 optionally includes that, in case the control signal is a down voice command of the customer detected by the sensor or a swiping left of the hand of the customer detected by the sensor, the controller is further configured to adjust the respective first random number by decreasing at least the displayed first random number by a predetermined amount, and that the controller is further configured to control the display to display the adjusted first random number.
In Example 9, the self-service-terminal of Examples 1 to 8 optionally includes that the controller is further configured to, in case the control signal is an up-voice command of the customer detected by the sensor or a swiping right of the hand of the customer detected by the sensor, adjust the respective first random number by increasing at least the displayed first random number by a predetermined amount. The controller is further configured to control the display to display the adjusted first random number.
In Example 10, the self-service-terminal of Examples 1 to 9 optionally includes that the controller is further configured to, in case the control signal is a confirmation voice command of the customer detected by the sensor or a push of the hand of the customer detected by the sensor, adjust the respective first random number by confirming the displayed first random number as a first number of the personal identification number. The controller is further configured to generate a next random number of the personal identification number. The controller is further configured to control the display to display the further random number.
In Example 11, the self-service-terminal of Examples 1 to 10 optionally includes that the controller is further configured to, in case the control signal is a correction voice command of the customer detected by the sensor or a swiping up of the hand of the customer detected by the sensor, adjust each first random number by cancelling a respective current number of the personal identification number displayed on the display and by returning to the previous number of the personal identification number displayed on the display.
In Example 12, the device of Examples 1 to 11 optionally includes that, in case the control signal is a cancellation voice command of the customer detected by the at least one touchless sensor or a swiping down of the hand of the customer detected by the at least one touchless sensor, the controller is further configured to adjust each first random number by cancelling the input of each number of the personal identification number.
Example 13 is a method for ensuring a secure input of a personal identification number at a self-service-terminal. The method includes sequentially generating for each number of the personal identification number a first random number by a controller, displaying each first random number as a first number of the personal identification number by a display, detecting for each of the displayed first numbers a control signal by a customer based on the respective displayed first random number by a touchless sensor of a communication device, adjusting based on the control signal each first number by the controller, and updating each of the displayed first numbers by the controller.
In example 14, the method of Example 13 optionally includes that in case the detecting by the sensor of the control signal is a detecting of a down voice command of the customer or a swiping left of a hand of the customer, the adjusting by the controller further includes decreasing by the controller of the first random number by a predetermined amount, and in case the detecting by the sensor of the control signal is a detecting of an up voice command of the customer or a swiping right of the hand of the customer, the adjusting by the controller further includes increasing by the controller of the first random number by a predetermined amount, and in case the detecting by the sensor of the control signal is a detecting of a confirmation voice command of the customer or a push of the hand of the customer, the adjusting by the controller further includes keeping the current first random number as the respective number of the personal identification number, the generating further includes generating by the controller a next random number of the personal identification number, and the displaying further includes displaying of at least the next random number by the display.
In example 15, the method of Example 13 or 14 optionally includes that in case the detecting by the sensor of the control signal is a detecting of a correction voice command of the customer or a swiping up of the hand of the customer, the adjusting by the controller further includes cancelling a respective current number of the personal identification number displayed by the display, and the updating further includes returning to the previous number of the personal identification number displayed by the display, and in case the detecting by the sensor of the control signal is a detecting of a cancellation voice command of the customer or a swiping down of the hand of the customer, the adjusting by the controller further includes cancelling the input of the personal identification number.

While the invention has been particularly shown and described with reference to specific examples, it should be understood by those skilled in the art that various changes in form and detail may be made therein without departing from the spirit and scope of the invention as defined by the appended claims. The scope of the invention is thus indicated by the appended claims and all changes, which come within the meaning and range of equivalency of the claims, are therefore intended to be embraced.

## Claims

1. Self-service-terminal, comprising:
a housing (1);
a display (2) operatively supported by the housing (1);
a card reader (3) operatively supported by the housing (1);
a currency dispenser (4) operatively supported by the housing (1);
a communication device (5) configured to comprise at least one touchless sensor (6),
a controller (7) configured to be arranged in the housing (1) and to be coupled to at least the display (2) and the communication device (5),
wherein the controller (7) is configured to sequentially generate for each number of a personal identification number a first random number (14),
wherein the controller (7) is further configured to control the display (2) to display at least each of the respective first random numbers (14),
wherein the communication device (5) is configured for each displayed first random number (14) to detect by the at least one touchless sensor (6) a control signal by a customer based on the displayed first random number (14), and
wherein the controller (7) is further configured based on the control signal to adjust each first random number (14) and to update each of the displayed numbers (14).

2. The self-service-terminal of claim 1,
wherein the communication device (5) comprises the display (2), and/or
wherein the display (2) is a non-observable display.

3. The self-service-terminal of any one of claims 1 or 2,
wherein the at least one touchless sensor (6) comprises a plurality of touchless sensors (6a, 6b, 6c, 6d).

4. The self-service-terminal of any one of the foregoing claims,
wherein each first random number (14) is a number in a range from 0 to 9.

5. The self-service-terminal of any one of the foregoing claims,
wherein the self-service-terminal further comprises a second display (8) configured to display at least data in respect to a bank account of the customer, and/or
wherein the self-service-terminal further comprises an audiovisual feedback configured to indicate at least that the personal identification number is correct.

6. The self-service-terminal of any one of the foregoing claims,
wherein the at least one touchless sensor (6) comprises a microphone, and
wherein the microphone is configured to detect the control signal by at least a voice command of the customer.

7. The self-service-terminal of any one of the foregoing claims,
wherein the at least one touchless sensor (6) is configured to detect the control signal (15a, 15b, 15c, 15d, 15e) by gesture recognition of at least a hand (15) of the customer, and
wherein the at least one touchless sensor (6) is selected from a group consisting of:
at least a binary sensor;
at least an ultrasonic sensor;
at least a distance measurement sensor;
at least a camera;
at least a time-of-flight camera; and
at least a structured light camera.

8. The self-service-terminal of any one of the foregoing claims,
wherein the controller (7) is further configured to, in case the control signal is a down voice command of the customer detected by the at least one touchless sensor (6) or a swiping left (15a) of the hand (15) of the customer detected by the at least one touchless sensor (6), adjust the respective first random number (14) by decreasing at least the displayed first random number (14) by a predetermined amount, and
wherein the controller (7) is further configured to control the display (2) to display the adjusted first random number (14).

9. The self-service-terminal of any one of the foregoing claims,
wherein the controller (7) is further configured to, in case the control signal is an up-voice command of the customer detected by the at least one touchless sensor (6) or a swiping right (15b) of the hand (15) of the customer detected by the at least one touchless sensor (6), adjust the respective first random number (14) by increasing at least the displayed first random number (14) by a predetermined amount, and
wherein the controller (7) is further configured to control the display (2) to display the adjusted first random number (14).

10. The self-service-terminal of any one of the foregoing claims,
wherein the controller (7) is further configured to, in case the control signal is a confirmation voice command of the customer detected by the at least one touchless sensor (6) or a push (15c) of the hand (15) of the customer detected by the at least one touchless sensor (6), adjust the respective first random number (14) by confirming the displayed first random number (14) as a first number of the personal identification number, and
wherein the controller (7) is further configured to generate a further random number (14) of the personal identification number, and
wherein the controller (7) is further configured to control the display (2) to display the further random number 14.

11. The self-service-terminal of any one of the foregoing claims,
wherein the controller (7) is further configured to, in case the control signal is a correction voice command of the customer detected by the at least one touchless sensor (6) or a swiping up (15d) of the hand (15) of the customer detected by the at least one touchless sensor (6), adjust each first random number (14) by cancelling a respective current number of the personal identification number displayed on the display (2) and by returning to the previous number of the personal identification number displayed on the display (2).

12. The self-service-terminal of any one of the foregoing claims,
wherein the controller (8) is further configured to, in case the control signal is a cancellation voice command of the customer detected by the at least one touchless sensor (6) or a swiping down (15e) of the hand (15) of the customer detected by the at least one touchless sensor (6), adjust each first random number (14) by cancelling the input of each number of the personal identification number.

13. A method for ensuring a secure input of a personal identification number at a self-service-terminal, the method comprising:
sequentially generating for each number of the personal identification number a first random number by a controller (S100);
displaying each first random number as a first number of the personal identification number by a display (S200);
detecting for each of the displayed first numbers a control signal by a customer based on the respective displayed first random number by at least one touchless sensor of a communication device (S300);
adjusting based on the control signal each first number by the controller (S400); and
updating each of the displayed first numbers by the controller (S500).

14. The method of claim 13,
wherein, in case the detecting by the at least one touchless sensor of the control signal is a detecting of a down voice command of the customer or a swiping left of a hand of the customer, the adjusting by the controller further comprises decreasing by the controller of the first random number by a predetermined amount, and
wherein, in case the detecting by the at least one touchless sensor of the control signal is a detecting of an up-voice command of the customer or a swiping right of the hand of the customer, the adjusting by the controller further comprises increasing by the controller of the first random number by a predetermined amount, and
wherein, in case the detecting by the at least one touchless sensor of the control signal is a detecting of a confirmation voice command of the customer or a push of the hand of the customer, the adjusting by the controller further comprises keeping the current first random number as the respective number of the personal identification number,
wherein the generating further comprises generating by the controller a next random number of the personal identification number, and
wherein the displaying further comprises displaying of at least the next random number by the display.

15. The method of claim 13 or 14,
wherein, in case the detecting by the at least one touchless sensor of the control signal is a detecting of a correction voice command of the customer or a swiping up of the hand of the customer, the adjusting by the controller further comprises cancelling a respective current number of the personal identification number displayed by the display, and
wherein the updating further comprises returning to the previous number of the personal identification number displayed by the display, and
wherein, in case the detecting by the at least one touchless sensor of the control signal is a detecting of a cancellation voice command of the customer or a swiping down of the hand of the customer, the adjusting by the controller further comprises cancelling the input of the personal identification number.

## Amended claims

### Amended claims in accordance with Rule 137(2) EPC.

1. Self-service-terminal, comprising:
a housing (1);
a display (2) operatively supported by the housing (1);
a card reader (3) operatively supported by the housing (1);
a currency dispenser (4) operatively supported by the housing (1);
a communication device (5) configured to comprise at least one touchless sensor (6),
wherein the touchless sensor (6) is able to resolve a distance to an object in space,
a controller (7) configured to be arranged in the housing (1) and to be coupled to at least the display (2) and the communication device (5),
wherein the controller (7) is configured to sequentially generate for each number of a personal identification number a first random number (14),
wherein the controller (7) is further configured to control the display (2) to display at least each of the respective first random numbers (14),
wherein the communication device (5) is configured for each displayed first random number (14) to detect by the at least one touchless sensor (6) a control signal by a customer based on the displayed first random number (14), and
wherein the controller (7) is further configured based on the control signal to adjust each first random number (14) and to update each of the displayed numbers (14).

2. The self-service-terminal of claim 1,
wherein the communication device (5) comprises the display (2), and/or
wherein the display (2) is a non-observable display.

3. The self-service-terminal of any one of claims 1 or 2,
wherein the at least one touchless sensor (6) comprises a plurality of touchless sensors (6a, 6b, 6c, 6d).

4. The self-service-terminal of any one of the foregoing claims,
wherein each first random number (14) is a number in a range from 0 to 9.

5. The self-service-terminal of any one of the foregoing claims,
wherein the self-service-terminal further comprises a second display (8) configured to display at least data in respect to a bank account of the customer, and/or
wherein the self-service-terminal further comprises an audiovisual feedback configured to indicate at least that the personal identification number is correct.

6. The self-service-terminal of any one of the foregoing claims,
wherein the at least one touchless sensor (6) comprises a microphone, and
wherein the microphone is configured to detect the control signal by at least a voice command of the customer.

7. The self-service-terminal of any one of the foregoing claims,
wherein the at least one touchless sensor (6) is configured to detect the control signal (15a, 15b, 15c, 15d, 15e) by gesture recognition of at least a hand (15) of the customer, and
wherein the at least one touchless sensor (6) is selected from a group consisting of:
at least a binary sensor;
at least an ultrasonic sensor;
at least a distance measurement sensor;
at least a camera;
at least a time-of-flight camera; and
at least a structured light camera.

8. The self-service-terminal of any one of the foregoing claims,
wherein the controller (7) is further configured to, in case the control signal is a down voice command of the customer detected by the at least one touchless sensor (6) or a swiping left (15a) of the hand (15) of the customer detected by the at least one touchless sensor (6), adjust the respective first random number (14) by decreasing at least the displayed first random number (14) by a predetermined amount, and
wherein the controller (7) is further configured to control the display (2) to display the adjusted first random number (14).

9. The self-service-terminal of any one of the foregoing claims,
wherein the controller (7) is further configured to, in case the control signal is an up-voice command of the customer detected by the at least one touchless sensor (6) or a swiping right (15b) of the hand (15) of the customer detected by the at least one touchless sensor (6), adjust the respective first random number (14) by increasing at least the displayed first random number (14) by a predetermined amount, and
wherein the controller (7) is further configured to control the display (2) to display the adjusted first random number (14).

10. The self-service-terminal of any one of the foregoing claims,
wherein the controller (7) is further configured to, in case the control signal is a confirmation voice command of the customer detected by the at least one touchless sensor (6) or a push (15c) of the hand (15) of the customer detected by the at least one touchless sensor (6), adjust the respective first random number (14) by confirming the displayed first random number (14) as a first number of the personal identification number, and
wherein the controller (7) is further configured to generate a further random number (14) of the personal identification number, and
wherein the controller (7) is further configured to control the display (2) to display the further random number 14.

11. The self-service-terminal of any one of the foregoing claims,
wherein the controller (7) is further configured to, in case the control signal is a correction voice command of the customer detected by the at least one touchless sensor (6) or a swiping up (15d) of the hand (15) of the customer detected by the at least one touchless sensor (6), adjust each first random number (14) by cancelling a respective current number of the personal identification number displayed on the display (2) and by returning to the previous number of the personal identification number displayed on the display (2).

12. The self-service-terminal of any one of the foregoing claims,
wherein the controller (8) is further configured to, in case the control signal is a cancellation voice command of the customer detected by the at least one touchless sensor (6) or a swiping down (15e) of the hand (15) of the customer detected by the at least one touchless sensor (6), adjust each first random number (14) by cancelling the input of each number of the personal identification number.

13. A method for ensuring a secure input of a personal identification number at a self-service-terminal, the method comprising:
sequentially generating for each number of the personal identification number a first random number by a controller (S100);
displaying each first random number as a first number of the personal identification number by a display (S200);
detecting for each of the displayed first numbers a control signal by a customer based on the respective displayed first random number by at least one touchless sensor of a communication device (S300), wherein the touchless sensor is able to resolve a distance to an object in space;
adjusting based on the control signal each first number by the controller (S400); and updating each of the displayed first numbers by the controller (S500).

14. The method of claim 13,
wherein, in case the detecting by the at least one touchless sensor of the control signal is a detecting of a down voice command of the customer or a swiping left of a hand of the customer, the adjusting by the controller further comprises decreasing by the controller of the first random number by a predetermined amount, and
wherein, in case the detecting by the at least one touchless sensor of the control signal is a detecting of an up-voice command of the customer or a swiping right of the hand of the customer, the adjusting by the controller further comprises increasing by the controller of the first random number by a predetermined amount, and
wherein, in case the detecting by the at least one touchless sensor of the control signal is a detecting of a confirmation voice command of the customer or a push of the hand of the customer, the adjusting by the controller further comprises keeping the current first random number as the respective number of the personal identification number,
wherein the generating further comprises generating by the controller a next random number of the personal identification number, and
wherein the displaying further comprises displaying of at least the next random number by the display.

15. The method of claim 13 or 14,
wherein, in case the detecting by the at least one touchless sensor of the control signal is a detecting of a correction voice command of the customer or a swiping up of the hand of the customer, the adjusting by the controller further comprises cancelling a respective current number of the personal identification number displayed by the display, and
wherein the updating further comprises returning to the previous number of the personal identification number displayed by the display, and
wherein, in case the detecting by the at least one touchless sensor of the control signal is a detecting of a cancellation voice command of the customer or a swiping down of the hand of the customer, the adjusting by the controller further comprises cancelling the input of the personal identification number.
